# FASCICULE DE BREVET EUROPEEN

(11) **EP 4 327 023 B1**
(45) Date de publication et mention de la délivrance du brevet: **21.01.2026**
(21) Numéro de dépôt: 22722856.6
(22) Date de dépôt: 15.04.2022
(51) Int. Cl.: F23R 3/20, F02K 3/10, F02K 1/04, F02K 3/11

(54) **CÔNE DE DIFFUSION POUR PARTIE ARRIÈRE DE TURBORÉACTEUR INTÉGRANT UN ANNEAU ACCROCHE-FLAMME EN BORD DE FUITE**
DIFFUSIONSKEGEL FÜR DAS HECKTEIL EINES STRAHLTRIEBWERKS MIT EINEM FLAMMENHALTERRING AN DER HINTERKANTE
DIFFUSION CONE FOR THE REAR PART OF A JET ENGINE, INCORPORATING A FLAME-HOLDER RING AT THE TRAILING EDGE

(30) Priorité: 19.04.2021 FR 2103992
(43) Date de publication de la demande: 28.02.2024
(73) Titulaire: SAFRAN AIRCRAFT ENGINES, 75015 Paris (FR)
(72) Inventeur: MALBOIS, Pierre André Gabriel, 77550 Moissy-Cramayel (FR); BECHET, Clément Jean Henri, 77550 Moissy-Cramayel (FR); GRESLIN, Emmanuel Jean André, 77550 Moissy-Cramayel (FR); LUNEL, Romain Nicolas, 77550 Moissy-Cramayel (FR)
(74) Mandataire: Santarelli
(86) Numéro de dépôt international: PCT/FR2022/050714
(87) Numéro de publication internationale: WO 2022/223914

(56) Documents cités:
- EP-B1- 1 457 738
- FR-A1- 3 097 298
- JP-A- 2006 010 179
- US-A- 2 929 203
- US-A- 3 009 317
- US-A- 5 367 874
- US-B1- 6 363 725

## Description

### DOMAINE TECHNIQUE

La présente invention se rapporte au domaine des turboréacteurs destinés à la propulsion des aéronefs et comprenant un canal de postcombustion. Elle concerne plus particulièrement un cône de diffusion pour partie arrière de turboréacteur, une partie arrière de turboréacteur comprenant un tel cône de diffusion, et un turboréacteur comprenant cette dernière.

### ÉTAT DE LA TECHNIQUE ANTÉRIEURE

Des turboréacteurs de type connu, notamment ceux destinés au vol supersonique, comprennent dans leur partie arrière, également dénommée arrière-corps, un canal de postcombustion, également dénommé « canal de réchauffe », dans lequel le flux de gaz issu de la turbine peut subir une nouvelle combustion grâce à l'oxygène restant en son sein, avant de se détendre dans une tuyère d'éjection.

Ce canal est délimité intérieurement par un cône de sortie de turbine, appelé cône de diffusion, ayant généralement pour fonction additionnelle de limiter des phénomènes vibratoires nuisibles connus sous le nom de « screech » dans la terminologie anglo-saxonne, au moyen de séries de trous débouchants ou non, dits « trous anti-screech », pratiqués dans la partie aval du cône de diffusion et/ou au moyen d'un ou plusieurs caissons, dits « caissons anti-screech », rapportés sur la surface interne du cône de diffusion.

Des dispositifs d'injection de carburant en forme de bras sont en général agencés à l'entrée du canal de combustion, par exemple autour du cône de diffusion, pour diffuser du carburant vers l'aval en direction d'un dispositif accroche-flammes destiné à stabiliser la flamme au sein du canal de post-combustion.

Un tel dispositif accroche-flammes comprend typiquement une rangée annulaire de bras accroche-flammes s'étendant radialement, destinés à favoriser une propagation radiale de la flamme le long de chacun des bras, et un anneau accroche-flammes reliant ces derniers deux-à-deux pour favoriser une propagation circonférentielle de la flamme, de bras en bras. Un tel anneau accroche-flammes présente en général une section en C ou en V, définissant deux branches rigidement raccordées l'une à l'autre du côté amont du turboréacteur, et présentant à l'aval des extrémités libres qui favorisent, en fonctionnement, l'apparition de zones de recirculation du flux de gaz, contribuant à la stabilisation de la flamme. Un cône de diffusion selon l'art antérieur est connu de US 5,367,874.

La conception d'un tel dispositif implique de faire un compromis entre la capacité du dispositif à accrocher et stabiliser au mieux la flamme, et la perte de charge induite par l'obstruction du canal de post combustion par le dispositif.

De plus, un tel dispositif présente une aptitude limitée à carburer le cœur du canal de postcombustion et donc à permettre une combustion satisfaisante dans cette zone lors du fonctionnement de la postcombustion, ce qui se traduit dans certains cas par un profil thermique en sortie de tuyère présentant un creux en son centre, pouvant nuire à la poussée du turboréacteur.

Dans ce contexte, il existe un besoin pour une partie arrière de turboréacteur améliorée.

### EXPOSÉ DE L'INVENTION

L'invention propose à cet effet un cône de diffusion destiné à délimiter intérieurement l'entrée d'un canal de postcombustion au sein d'une partie arrière de turboréacteur, comprenant une paroi annulaire s'étendant depuis une base en convergeant vers un côté opposé où ladite paroi annulaire forme un sommet tronqué du cône de diffusion définissant un bord de fuite annulaire de ce dernier, et comprenant un anneau accroche-flammes à section comprenant une branche externe et une branche interne rigidement raccordées l'une à l'autre du côté de la base et telles que la branche externe s'étend autour de la branche interne, moyennant quoi les branches externe et interne délimitent entre elles un espace interne de l'anneau accroche-flammes débouchant du côté opposé à la base du cône de diffusion, l'une des branches externe et interne étant constituée dudit bord de fuite annulaire, et l'anneau accroche-flammes comportant au moins une entrée de carburant agencée pour l'admission de carburant dans l'espace interne de l'anneau accroche-flammes.

Un tel anneau accroche-flammes permet d'assurer et de contrôler la propagation de la flamme au cœur du canal de postcombustion.

Suivant d'autres aspects avantageux de l'invention, le dispositif de liaison présente une ou plusieurs des caractéristiques suivantes, prise(s) isolément ou suivant toutes les combinaisons techniquement possibles :
- la branche externe est ladite branche constituée dudit bord de fuite annulaire ;
- le cône de diffusion comprend en outre un écran annulaire de protection thermique qui est agencé entre les branches externe et interne de manière à obstruer partiellement une ouverture par laquelle l'espace interne de l'anneau accroche-flammes débouche du côté opposé à la base du cône de diffusion, et conformé pour délimiter, le long de chacune des branches externe et interne, un passage de sortie correspondant par lequel l'espace interne de l'anneau accroche-flammes débouche du côté opposé à la base du cône de diffusion ;
- l'entrée de carburant est agencée du côté de la base du cône de diffusion.

L'invention concerne également une partie arrière de turboréacteur, comprenant un canal de postcombustion, un carter de canal de postcombustion entourant ledit canal, un cône de diffusion du type décrit ci-dessus délimitant intérieurement ledit canal, et un système d'injection de carburant configuré pour injecter du carburant dans l'espace interne de l'anneau accroche-flammes par ladite entrée de carburant.

Dans des modes de réalisation préférés de l'invention, la partie arrière de turboréacteur comprend en outre une rangée annulaire de bras accroche-flammes présentant des extrémités radialement internes agencées axialement en regard de l'anneau accroche-flammes.

Dans des modes de réalisation préférés de l'invention, les bras accroche-flammes s'étendent librement les uns par rapport aux autres à partir de leurs extrémités radialement externes.

Dans des modes de réalisation préférés de l'invention, la partie arrière de turboréacteur comprend en outre un système de circulation d'air configuré pour alimenter l'espace interne de l'anneau accroche-flammes en air issu d'un flux secondaire de turboréacteur.

L'invention concerne également un turboréacteur pour aéronef, comprenant un cône de diffusion du type décrit ci-dessus ou une partie arrière du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
[Fig. 1] est une demi-vue schématique en section axiale d'un turboréacteur comprenant un canal de postcombustion ;
[Fig. 2] est une demi-vue schématique en section axiale d'une partie arrière de turboréacteur d'un type connu ;
[Fig. 3] est une demi-vue schématique en section axiale d'une partie arrière du turboréacteur de la figure 1, comprenant un cône de diffusion selon un mode de réalisation préféré de l'invention ;
[Fig. 4] est une vue à plus grande échelle d'une partie de la figure 3.

Dans l'ensemble de ces figures, des références identiques peuvent désigner des éléments identiques ou analogues.

### EXPOSÉ DÉTAILLÉ DE MODES DE RÉALISATION PRÉFÉRÉS

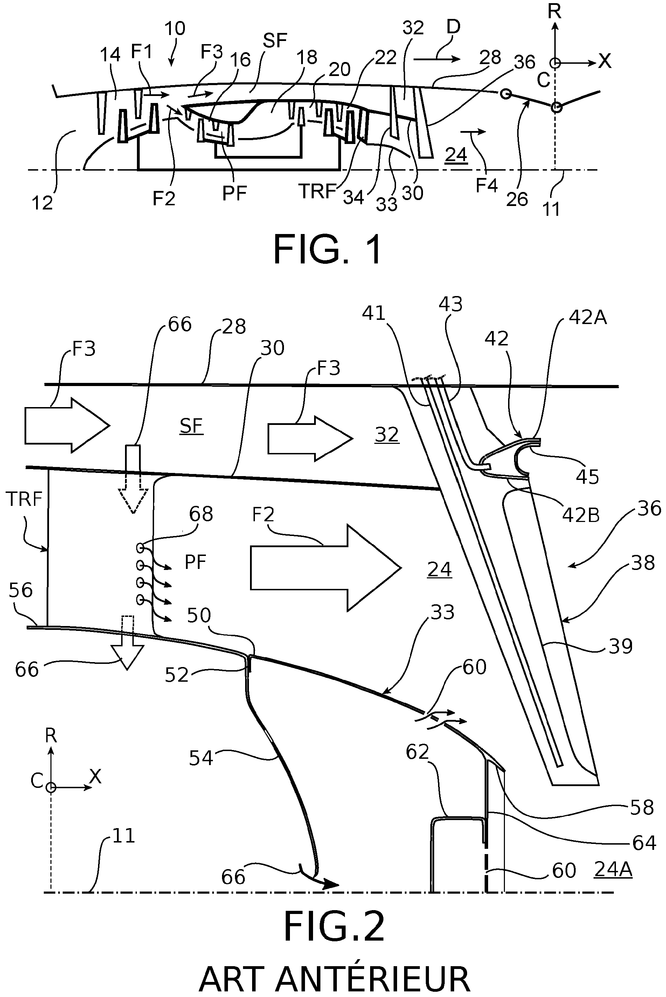

La figure 1 illustre un turboréacteur 10, par exemple à double corps et à double flux, destiné par exemple à la propulsion d'un aéronef apte au vol supersonique, et donc destiné en particulier à être installé dans le fuselage d'un tel aéronef. L'invention est bien entendu applicable à d'autres types de turboréacteurs.

Dans l'ensemble de cette description, la direction axiale X est la direction de l'axe longitudinal 11 du turboréacteur. Sauf lorsqu'il en est stipulé autrement, la direction radiale R est en tout point une direction orthogonale à l'axe longitudinal 11 et passant par ce dernier, et la direction circonférentielle C (parfois dénommée direction azimutale ou ortho-radiale) est en tout point une direction orthogonale à la direction radiale R et à l'axe longitudinal 11. Les qualificatifs « amont » et « aval » sont définis par référence à une direction générale D de l'écoulement des gaz dans le turboréacteur 10.

À titre illustratif, un tel turboréacteur 10 comprend, de l'amont vers l'aval, une entrée d'air 12, un compresseur basse pression 14, un compresseur haute pression 16, une chambre de combustion 18, une turbine haute pression 20, une turbine basse pression 22, un canal de postcombustion 24, et une tuyère 26 à géométrie variable, par exemple de type convergente-divergente. Ces organes du turboréacteur sont tous centrés selon l'axe longitudinal 11 de celui-ci.

Un carter de canal de postcombustion 28 entoure ledit canal.

De plus, une virole de séparation de flux 30, couramment dénommée « confluence », s'étend vers l'aval à partir d'un carter arrière TRF de la turbine basse pression 22, à l'intérieur du carter 28, concentriquement à ce dernier, de manière à délimiter extérieurement l'entrée du canal de postcombustion 24 et à délimiter, avec le carter 28, un canal annulaire 32 formant l'extrémité aval de la veine secondaire SF.

Enfin, un cône de diffusion 33 s'étend vers l'aval dans le prolongement d'un moyeu du carter arrière TRF de la turbine basse pression 22, de manière à délimiter intérieurement l'entrée du canal de postcombustion 24.

De manière bien connue, le compresseur haute pression 16, la chambre de combustion 18, et les turbines haute pression 20 et basse pression 22, définissent une veine primaire PF. Cette dernière est entourée par une veine secondaire SF de la turbomachine qui s'étend de l'amont vers l'aval, à partir d'une sortie du compresseur basse pression 14 jusqu'à une extrémité aval de la virole de séparation de flux 30, et qui inclut donc le canal annulaire 32 précité.

Ainsi, en fonctionnement, de l'air F1 qui est entré par l'entrée d'air 12 et qui a été comprimé par le compresseur basse pression 14, se divise ensuite en un flux primaire F2 qui circule dans la veine primaire PF et en un flux secondaire F3 qui circule dans la veine secondaire SF. Le flux primaire F2 est alors comprimé davantage dans le compresseur haute pression 16, puis mélangé à du carburant et enflammé dans la chambre de combustion 18, avant de subir une détente dans la turbine haute pression 20 puis dans la turbine basse pression 22.

Les gaz de combustion constituant le flux primaire F2 en sortie de la turbine et le flux secondaire F3 se mélangent au sein du canal de postcombustion 24 à partir de l'extrémité aval de la virole de séparation de flux 30, et constituent ainsi un flux de gaz d'échappement F4 qui poursuit sa circulation dans le canal de postcombustion 24 puis s'échappe du turboréacteur 10 au travers de la sortie délimitée par la tuyère 26.

En régime de fonctionnement avec postcombustion, par exemple pour propulser un aéronef à des vitesses supersoniques, du carburant est injecté dans le flux de gaz au sein du canal de postcombustion 24, et le mélange ainsi constitué est enflammé au sein de ce canal afin de générer un surcroît de poussée.

À cet effet, des dispositifs d'injection de carburant 34 en forme générale de bras sont agencés à l'entrée du canal de postcombustion 24 pour vaporiser du carburant vers l'aval en direction d'un dispositif accroche-flammes 36 destiné à favoriser la stabilisation des flammes.

La figure 2 illustre à plus grande échelle la partie arrière d'un tel turboréacteur, dans une configuration connue. Cette figure montre en particulier le dispositif accroche-flammes 36, qui comprend une rangée annulaire de bras accroche-flammes 38 s'étendant radialement par rapport l'axe longitudinal 11 du turboréacteur, et un anneau accroche-flammes 42 centré sur l'axe 11 et reliant deux-à-deux les bras accroche-flammes 38.

Les bras accroche-flammes 38 sont destinés à favoriser une propagation radiale de la flamme le long de chacun des bras, tandis que l'anneau accroche-flammes 42 est destiné à favoriser une propagation circonférentielle de la flamme, de bras en bras.

Les bras accroche-flammes 38 sont chacun raccordés au carter de canal de postcombustion 28, à partir duquel ces bras s'étendent radialement vers l'intérieur.

Dans l'exemple illustré sur la figure 2, l'anneau accroche-flammes 42 est agencé à l'extrémité aval de l'espace annulaire 32 formant l'extrémité aval de la veine secondaire SF. Dans d'autres configurations connues, l'anneau accroche-flammes 42 est agencé à l'intérieur de la virole de séparation de flux 30.

Les bras accroche-flammes 38 comprennent en général des moyens pour faire circuler en leur sein de l'air relativement frais, issu de la veine secondaire SF, afin d'assurer la protection thermique des bras accroche-flammes. Ces bras comprennent par exemple chacun un dispositif de protection thermique 39 apte à canaliser l'air frais issu de la veine secondaire. Dans certains cas, tels que l'exemple illustré, les bras accroche-flammes 38 comprennent en outre des moyens d'injection de carburant 41.

L'anneau accroche-flammes 42 présente une section concave en direction de l'aval, globalement en C ou en V, définissant ainsi deux branches 42A, 42B rigidement raccordées l'une à l'autre du côté amont et présentant à l'aval des extrémités libres qui favorisent, en fonctionnement, l'apparition de zones de recirculation du flux de gaz, contribuant à la stabilisation de la flamme. L'anneau accroche-flammes 42 comporte en général également des moyens pour faire circuler en son sein de l'air frais issu de la veine secondaire SF, et dans certains cas, tels que l'exemple illustré, des moyens d'injection de carburant 43. L'anneau accroche-flammes 42 comporte typiquement un écran de protection thermique 45 agencé entre les branches 42A et 42B pour canaliser l'air frais issu de la veine secondaire et protéger ainsi l'anneau 42 du côté aval vis-à-vis des gaz chauds environnants et du rayonnement thermique de la flamme.

En ce qui concerne le cône de diffusion 33, ce dernier est principalement constitué d'une paroi annulaire de forme convergeant vers l'aval, et présente à son extrémité amont une base 50, par exemple pourvue d'une bride radiale 52, fixée sur une virole d'extrémité aval 54 du carter arrière TRF, laquelle virole 54 s'étend radialement vers l'intérieur à partir d'une extrémité aval du moyeu 56 du carter arrière. Du côté aval, le cône de diffusion 33 présente un sommet tronqué définissant un bord de fuite annulaire 58.

Outre sa fonction consistant à conformer intérieurement l'entrée du canal de postcombustion 24 dans le prolongement de la veine primaire PF, le cône de diffusion 33 peut être en outre conçu pour limiter des phénomènes vibratoires nuisibles connus sous le nom de « screech », qui concernent des résonances à haute fréquence favorisées par la présence d'un dispositif accroche-flammes. Pour limiter de tels phénomènes, le cône de diffusion 33 est par exemple pourvu de trous 60 débouchants ou non, dits « trous anti-screech », pratiqués dans la partie aval de la paroi annulaire du cône de diffusion, et au moyen d'un caisson 62, dit « caisson anti-screech », rapporté sur une surface interne du cône de diffusion 33, par exemple sur la surface interne d'une paroi transversale d'extrémité aval 64 du cône de diffusion 33, au-delà de laquelle le bord de fuite annulaire 58 est formé en saillie vers l'aval et radialement vers l'intérieur. La paroi transversale d'extrémité aval 64 est typiquement également pourvue de trous anti-screech 60 en regard de la paroi constituant le caisson anti-screech 62.

Le cône de diffusion est en général ventilé au moyen d'un flux d'air frais prélevé dans la veine secondaire SF, correspondant aux flèches 66 de la figure 2. Ce flux d'air est par exemple évacué au travers de tout ou partie des trous anti-screech 60. Cela ne fait bien entendu pas obstacle à ce qu'une autre partie du flux d'air prélevé dans la veine secondaire soir évacuée dans la vaine primaire PF au travers d'ouvertures 68 ménagées dans des bras radiaux du carter arrière TRF.

Toutefois, il est souhaitable dans certains cas d'améliorer l'accrochage et la stabilisation de la flamme au cœur 24A du canal de postcombustion 24.

Le document US4798048 propose un cône de diffusion intégrant un décroché annulaire doté d'une double paroi, situé dans une région axialement médiane du cône, entre la base du cône et son extrémité aval, pour générer une zone de recirculation de flux. En supposant qu'un tel avantage soit effectivement obtenu avec ce dispositif, les deux objectifs mentionnés ci-dessus seraient effectivement résolus au moins dans une certaine mesure. Une telle proposition présente toutefois l'inconvénient d'obliger à revoir complètement la configuration du cône, et notamment la configuration des moyens destinés à limiter les phénomènes vibratoires de « screech » le cas échéant.

De plus, il est en général souhaitable d'améliorer la carburation de la flamme au cœur 24A du canal de postcombustion, ce que ne permet pas le cône de diffusion du document précité.

La présente invention propose une solution à ces problèmes, consistant à prévoir un anneau accroche-flammes à l'extrémité aval du cône de diffusion 33, en mettant à profit le bord de fuite annulaire 58 du cône pour former une branche de l'anneau accroche-flammes, et en dotant l'anneau accroche-flammes d'une entrée de carburant pour alimenter l'anneau accroche-flammes en carburant, comme cela apparaîtra plus clairement dans ce qui suit.

Un tel anneau accroche-flammes permet d'améliorer l'accrochage et la stabilisation de la flamme au cœur du canal de postcombustion sans remettre en question la configuration globale du cône de diffusion, et permet en outre d'améliorer la carburation de la flamme au cœur du canal de postcombustion.

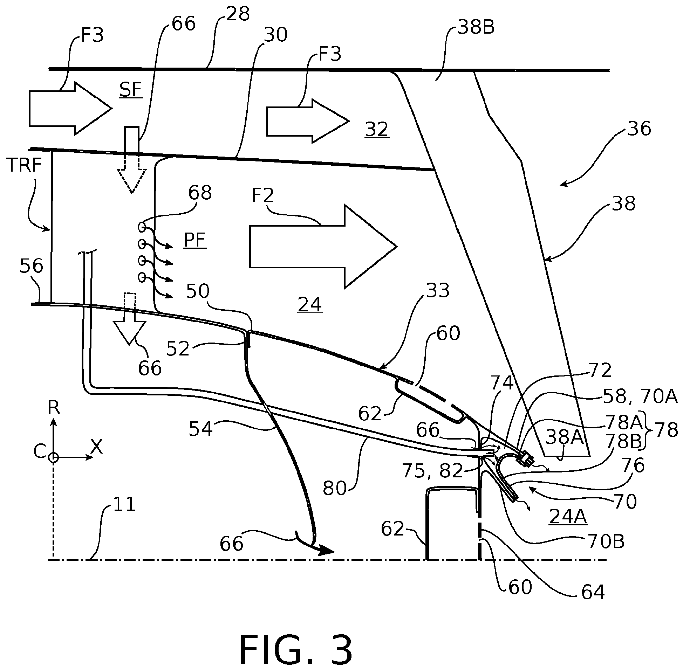

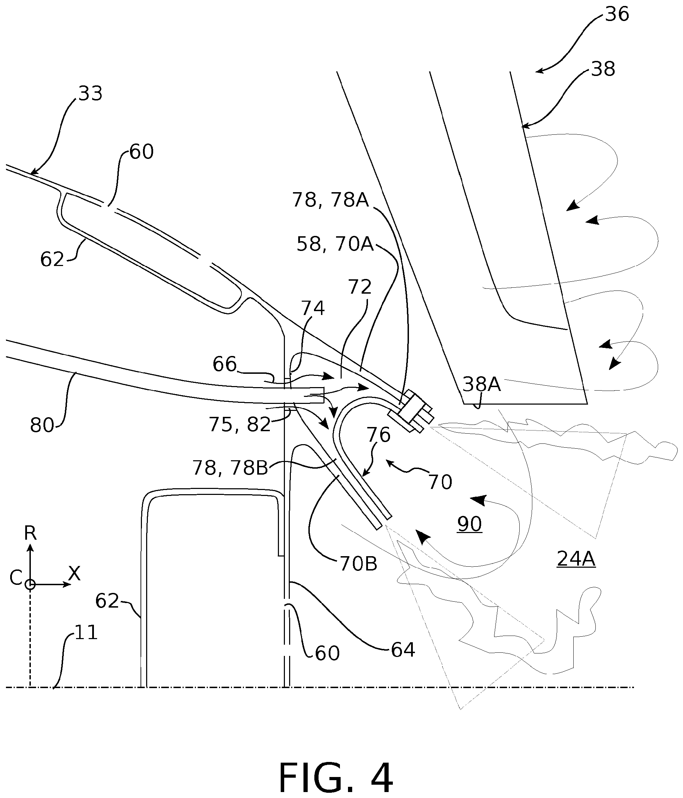

Plus précisément, en référence aux figures 3 et 4, un cône de diffusion 33 selon un mode de réalisation préféré de l'invention comporte un anneau accroche-flammes 70 à section comprenant une branche externe 70A et une branche interne 70B rigidement raccordées l'une à l'autre du côté de la base 50 du cône, et telles que la branche externe 70A s'étend autour de la branche interne 70B.

De cette manière, les branches externe 70A et interne 70B délimitent entre elles un espace interne 72 de l'anneau accroche-flammes 70, qui débouche du côté opposé à la base 50 du cône, c'est-à-dire en direction de l'aval.

Comme indiqué ci-dessus, l'une des branches externe 70A et interne 70B est constituée par le bord de fuite annulaire 58. Il faut comprendre par « bord de fuite » l'extrémité aval de forme convergente du cône de diffusion 33, indépendamment du fait que cette extrémité soit formée d'un seul tenant avec le reste du cône ou soit constituée d'une pièce ou d'un assemblage rapporté(e) sur la paroi transversale d'extrémité aval 64 du cône, et indépendamment du fait que cette extrémité soit formée d'une paroi simple ou de plusieurs parois superposées. Dans l'exemple préférentiel illustré, le cône de diffusion est formé d'une pièce s'étendant d'un seul tenant depuis la base 50 jusqu'au bord de fuite 58 inclus.

De plus, dans le mode de réalisation préféré, c'est la branche externe 70A qui est constituée par le bord de fuite annulaire 58 du cône, ce qui permet de rapprocher au mieux l'anneau accroche-flammes du cœur du canal de postcombustion.

Les deux branches 70A, 70B sont par exemple raccordées à la paroi transversale d'extrémité aval 64 du cône à distance l'une de l'autre, de sorte que la paroi transversale 64 forme un fond 74 de l'espace interne 72 de l'anneau accroche-flammes 70. Les deux branches 70A, 70B et le fond 74 définissent ainsi une section globalement en forme de C pour l'anneau accroche-flammes 70. En variante, les deux branches peuvent être raccordées directement l'une à l'autre et définir ainsi une section globalement en forme de V pour l'anneau accroche-flammes.

Dans l'exemple illustré, les deux branches 70A, 70B divergent l'une de l'autre en direction de l'aval. Ainsi, la branche interne 70B présente un taux de convergence vers l'aval supérieur à celui de la branche externe 70A.

L'anneau accroche-flammes 70 comporte une ou plusieurs entrées de carburant 75, par exemple formée(s) dans le fond 74 de l'espace interne 72, pour l'admission de carburant au sein de l'espace interne 72, comme cela apparaîtra plus clairement dans ce qui suit.

Par ailleurs, un écran annulaire de protection thermique 76 est avantageusement agencé entre les branches externe 70A et interne 70B de manière à obstruer partiellement une ouverture 78 par laquelle l'espace interne 72 débouche du côté opposé à la base 50 du cône de diffusion (c'est-à-dire du côté aval). Un tel écran annulaire 76 est par exemple concave de manière à délimiter, le long de chacune des branches 70A et 70B, un passage de sortie correspondant 78A, 78B de l'espace interne 72. Les passages de sortie 78A, 78B constituent ainsi la partie non obstruée de l'ouverture 78 précitée de l'espace interne 72.

La partie arrière de turboréacteur comprend un système d'injection de carburant, comprenant une ou plusieurs canalisations de carburant 80, le cas échéant réparties autour de l'axe longitudinal 11, pour injecter du carburant dans l'espace interne 72 de l'anneau accroche-flammes 70 par la ou les entrée(s) de carburant 75, et permettre l'éjection dudit carburant dans le canal de postcombustion 24 au travers de l'ouverture 78, en l'occurrence au travers des passages de sortie 78A, 78B. Il est à noter qu'une telle entrée de carburant 75 est par exemple constituée d'un simple orifice permettant le passage d'une canalisation de carburant 80 correspondante. Une telle canalisation de carburant présente par exemple une extrémité terminée par une paroi multi-percée pour favoriser la diffusion du carburant dans l'espace interne 72.

La (ou les) canalisation(s) de carburant chemine(nt) par exemple au sein du carter arrière de turbine TRF, jusqu'à un dispositif d'alimentation en carburant adéquat. Une ou plusieurs ouvertures sont ménagées au travers de la virole d'extrémité aval 54 du carter arrière TRF pour permettre le passage de la (ou des) canalisation(s) de carburant.

En outre, la partie arrière de turboréacteur comprend avantageusement des moyens de circulation d'air configurés pour alimenter l'espace interne 72 de l'anneau accroche-flammes 70 en air 66 issu du flux secondaire F3. Ces moyens comprennent un ou plusieurs orifice(s) de passage d'air 82 ménagé(s) dans le fond 74 de l'espace interne 72. Une ou plusieurs des entrées de carburant 75 peuvent constituer de tels orifices de passage d'air 82, par exemple du fait d'un jeu prévu entre la canalisation de carburant 80 correspondante et le bord de l'entrée de carburant 75, comme le montrent les figures 3 et 4.

Dans le mode de réalisation illustré, la partie arrière de turboréacteur comprend une rangée annulaire de bras accroche-flammes 38 présentant des extrémités radialement internes 38A respectives agencées axialement en regard de l'anneau accroche-flammes 70 de manière à se trouver au sein de zones de recirculation de gaz 90 induites par les branches 70A et 70B de l'anneau accroche-flammes, comme le montre plus clairement la figure 4.

De plus, la partie arrière de turboréacteur est avantageusement dépourvue d'anneau accroche-flammes reliant les bras deux-à-deux, à la différence de ce qui a été décrit ci-dessus en référence à la figure 2. Autrement dit, les bras accroche-flammes 38 de la figure 3 s'étendent librement les uns par rapport aux autres à partir de leurs extrémités radialement externes 38B. En effet, l'anneau accroche-flammes 70 du cône de diffusion 33 permet d'assurer la propagation circonférentielle de la flamme entre les bras accroche-flammes 38.

Le cône de diffusion 33 selon le mode de réalisation préféré de l'invention comporte avantageusement des trous anti-screech 60 et/ou un ou plusieurs caissons anti-screech 62, qui sont par exemple similaires à ceux du cône de diffusion de la figure 2. Le cône de diffusion 33 comporte avantageusement un caisson « anti-screech » 62 rapporté sur la surface interne de la paroi annulaire du cône de diffusion 33, en regard des trous « anti-screech » 60 formés dans cette paroi. Ce caisson « anti-screech » 62 est de préférence fermé, de même que le caisson « anti-screech » 62 rapporté sur la paroi transversale 64, de manière à éviter une circulation d'air au travers des trous « anti-screech » 60 et réserver ainsi davantage d'air issu de la veine secondaire pour l'anneau accroche-flammes 70.

En fonctionnement, l'air frais 66 issu de la veine secondaire et acheminé par les moyens de circulation d'air précités pénètre dans l'espace interne 72 de l'anneau accroche-flammes 70 et protège ainsi thermiquement l'anneau accroche-flammes, à la fois vis-à-vis du flux de gaz chauds environnant et vis-à-vis du rayonnement des flammes.

Cet air frais est éjecté hors de l'espace interne 72 par les passages de sortie 78A, 78B, et pénètre ainsi au cœur du canal de postcombustion. Cet air frais permet ainsi d'améliorer le mélange des gaz issus des flux primaire et secondaire en fonctionnement en régime sec (c'est-à-dire sans postcombustion), ce qui permet une amélioration des performances du turboréacteur en termes de poussée.

Lors du fonctionnement de la postcombustion, l'espace interne 72 de l'anneau accroche-flammes 70 est en outre alimenté en carburant par la ou les canalisation(s) de carburant 80. Le carburant qui en est issu se mélange avec l'air frais de la veine secondaire au sein de l'espace interne 72 et s'échappe de ce dernier par les passages de sortie 78A, 78B. Une partie du carburant peut également ruisseler sous forme liquide sur les surfaces délimitant les passages de sortie 78A, 78B et être cisaillé par le flux d'air environnant à la sortie desdits passages. Dans tous les cas, l'anneau accroche-flammes 70 permet ainsi de carburer le cœur 24A du canal de postcombustion, en particulier les zones de recirculation de gaz 90 induites par les branches 70A, 70B de l'anneau accroche-flammes 70. Ce dernier contribue ainsi à un contrôle et à une propagation circonférentielle de la flamme.

L'allumage de la flamme en cœur de canal de postcombustion peut être réalisé au moyen d'un initiateur conventionnel au niveau d'un ou plusieurs des bras accroche-flammes 38, le long desquels la flamme se propage radialement vers l'intérieur jusqu'à atteindre le cœur 24A du canal de postcombustion, où la propagation circonférentielle de la flamme est favorisée par les zones de recirculation 90 et la présence de carburant issu de l'anneau accroche-flammes 70.

## Revendications

1. Cône de diffusion (33) destiné à délimiter intérieurement l'entrée d'un canal de postcombustion au sein d'une partie arrière de turboréacteur, comprenant une paroi annulaire s'étendant depuis une base (50) en convergeant vers un côté opposé où ladite paroi annulaire forme un sommet tronqué du cône de diffusion définissant un bord de fuite annulaire (58) de ce dernier, le cône de diffusion (33) comprenant un anneau accroche-flammes (70) à section comprenant une branche externe (70A) et une branche interne (70B) rigidement raccordées l'une à l'autre et telles que la branche externe (70A) s'étend autour de la branche interne (70B), moyennant quoi les branches externe et interne délimitent entre elles un espace interne (72) de l'anneau accroche-flammes, l'anneau accroche-flammes comportant au moins une entrée de carburant (75) agencée pour l'admission de carburant dans l'espace interne (72) de l'anneau accroche-flammes, **caractérisé en ce que** la branche externe (70A) et la branche interne (70B) sont rigidement raccordées l'une à l'autre du côté de la base (50), **en ce que** l'espace interne (72) de l'anneau accroche-flammes débouche du côté opposé à la base (50) du cône de diffusion, et **en ce que** l'une des branches externe et interne est constituée dudit bord de fuite annulaire (58).

2. Cône de diffusion selon la revendication 1, dans lequel la branche externe (70A) est ladite branche constituée dudit bord de fuite annulaire (58).

3. Cône de diffusion selon la revendication 1 ou 2, comprenant en outre un écran annulaire de protection thermique (76) qui est :
- agencé entre les branches externe (70A) et interne (70B) de manière à obstruer partiellement une ouverture (78) par laquelle l'espace interne (72) de l'anneau accroche-flammes débouche du côté opposé à la base (50) du cône de diffusion, et
- conformé pour délimiter, le long de chacune des branches externe (70A) et interne (70B), un passage de sortie (78A, 78B) correspondant par lequel l'espace interne (72) de l'anneau accroche-flammes débouche du côté opposé à la base (50) du cône de diffusion.

4. Cône de diffusion selon l'une quelconque des revendications 1 à 3, dans lequel ladite entrée de carburant (75) est agencée du côté de la base (50) du cône de diffusion.

5. Partie arrière de turboréacteur, comprenant un canal de postcombustion (24), un carter de canal de postcombustion (28) entourant ledit canal, un cône de diffusion (33) selon l'une quelconque des revendications 1 à 4 délimitant intérieurement l'entrée dudit canal, et un système d'injection de carburant configuré pour injecter du carburant dans l'espace interne (72) de l'anneau accroche-flammes (70) par ladite entrée de carburant (75).

6. Partie arrière de turboréacteur selon la revendication 5, comprenant en outre une rangée annulaire de bras accroche-flammes (38) présentant des extrémités radialement internes (38A) agencées axialement en regard de l'anneau accroche-flammes (70).

7. Partie arrière de turboréacteur selon la revendication 6, dans laquelle les bras accroche-flammes (38) s'étendent librement les uns par rapport aux autres à partir de leurs extrémités radialement externes (38B).

8. Partie arrière de turboréacteur selon l'une quelconque des revendications 5 à 7, comprenant en outre un système de circulation d'air configuré pour alimenter l'espace interne (72) de l'anneau accroche-flammes (70) en air issu d'un flux secondaire de turboréacteur (F3).

9. Turboréacteur pour aéronef, comprenant un cône de diffusion (33) selon l'une quelconque des revendications 1 à 4 ou une partie arrière selon l'une quelconque des revendications 5 à 8.

## Patentansprüche

1. Diffusionskegel (33) zur inneren Begrenzung des Eintritts eines Nachbrennkanals innerhalb eines hinteren Teils eines Turboreaktors, umfassend eine Ringwand, die sich von einer Basis (50) erstreckt und zu einer gegenüberliegenden Seite konvergiert, wo die Ringwand einen abgeschnittenen Scheitelpunkt des Diffusionskegels bildet, der eine ringförmige Hinterkante (58) desselben definiert, wobei der Diffusionskegel (33) einen Flammenfangring (70) mit einem Querschnitt umfasst, der einen äußeren Zweig (70A) und einen inneren Zweig (70B) umfasst, die starr miteinander verbunden sind, derart, dass sich der äußere Zweig (70A) um den inneren Zweig (70B) erstreckt, wobei der äußere und der innere Zweig einen inneren Raum (72) des Flammenfangrings untereinander abgrenzen, wobei der Flammenfangring mindestens einen zu dem Kraftstoffeintritt (75) in den inneren Raum (72) des Flammenfangrings angeordneten Kraftstoffeintritt aufweist, **dadurch gekennzeichnet, dass** der äußere Zweig (70A) und der innere Zweig (70B) auf der Basisseite (50) starr miteinander verbunden sind, wobei der innere Raum (72) des Flammenfangrings auf der gegenüberliegenden Seite der Basis (50) des Diffusionskegels mündet, und wobei einer der äußeren und inneren Zweige aus der ringförmigen Hinterkante (58) besteht.

2. Diffusionskegel nach Anspruch 1, wobei der äußere Zweig (70A) der Zweig ist, der aus der ringförmigen Hinterkante (58) besteht.

3. Diffusionskegel nach Anspruch 1 oder 2, ferner umfassend einen ringförmigen Wärmeschutzschirm (76), der:
- zwischen den äußeren (70A) und inneren Zweigen (70B) angeordnet ist, so dass eine Öffnung (78) teilweise verschlossen ist, durch die der innere Raum (72) des Flammenfangrings auf der dem Boden (50) des Diffusionskegels gegenüberliegenden Seite mündet, und
- ausgebildet, um entlang jedes der äußeren (70A) und inneren (70B) Zweige einen entsprechenden Ausgangsdurchgang (78A, 78B) zu begrenzen, durch den der innere Raum (72) des Flammenfangrings auf der dem Boden (50) des Diffusionskegels gegenüberliegenden Seite mündet.

4. Diffusionskegel nach einem der Ansprüche 1 bis 3, wobei der Kraftstoffeintritt (75) auf der Seite des Bodens (50) des Diffusionskegels angeordnet ist.

5. Hinterer Teil eines Turboreaktors, umfassend einen Nachbrennkanal (24), ein Nachbrennkanalgehäuse (28), das den Kanal umgibt, einen Diffusionskegel (33) nach einem der Ansprüche 1 bis 4, der den Eintritt des Kanals innen abgrenzt, und ein Kraftstoffeinspritzsystem, das so eingerichtet ist, dass es Kraftstoff durch den Kraftstoffeintritt (75) in den inneren Raum (72) des Flammenfangrings (70) einspritzt.

6. Hinterer Teil eines Turboreaktors nach Anspruch 5, ferner umfassend eine ringförmige Reihe von Flammenfangarmen (38) mit radial innenliegenden Enden (38A), die axial gegenüber dem Flammenfangring (70) angeordnet sind.

7. Hinterer Teil eines Turboreaktors nach Anspruch 6, wobei sich die Flammenfangarme (38) von ihren radial äußeren Enden (38B) frei zueinander erstrecken.

8. Hinterer Teil eines Turboreaktors nach einem der Ansprüche 5 bis 7, ferner umfassend ein Luftzirkulationssystem, das so eingerichtet ist, dass es den inneren Raum (72) des Flammenfangrings (70) mit Luft versorgt, die aus einem Sekundärstrom eines Turboreaktors (F3) stammt.

9. Turboreaktor für Luftfahrzeuge, umfassend einen Diffusionskegel (33) nach einem der Ansprüche 1 bis 4 oder ein hinteres Teil nach einem der Ansprüche 5 bis 8.

## Claims

1. Diffusion cone (33) intended to internally delimit the entry of a post-combustion channel within a rear part of a turbojet engine, comprising an annular wall extending from a base (50) converging to an opposite side where said annular wall forms a truncated top of the diffusion cone defining an annular trailing edge (58) thereof, the diffusion cone (33) comprising a flame-holder ring (70) with a section comprising an outer branch (70A) and an inner branch (70B) rigidly connected to each other and such that the outer branch (70A) extends around the inner branch (70B), whereby the outer and inner branches delimit between themselves an inner space (72) of the flame-holder ring, the flame-holder ring comprising at least one fuel inlet (75) arranged for the intake of fuel into the inner space (72) of the flame-holder ring, **characterised in that** the outer branch (70A) and the inner branch (70B) are rigidly connected to each other on the base side (50), **in that** the inner space (72) of the flame-holder ring opens on the side opposite to the base (50) of the diffusion cone, and **in that** one of the outer and inner branches consists of said annular trailing edge (58).

2. Diffusion cone according to claim 1, wherein the outer branch (70A) is said branch consisting of said annular trailing edge (58).

3. Diffusion cone according to claim 1 or 2, further comprising an annular thermal protection screen (76) which is:
- arranged between the outer (70A) and inner (70B) branches so as to partially obstruct an opening (78) through which the inner space (72) of the flame-holder ring opens to the side opposite to the base (50) of the diffusion cone, and
- shaped to delimit, along each of the outer (70A) and inner (70B) branches, a corresponding outlet passage (78A, 78B) through which the inner space (72) of the flame-holder ring opens on the side opposite to the base (50) of the diffusion cone.

4. Diffusion cone according to any one of claims 1 to 3, wherein said fuel inlet (75) is arranged on the base (50) side of the diffusion cone.

5. Turbojet engine rear part, comprising a post-combustion channel (24), a post-combustion channel housing (28) surrounding said channel, a diffusion cone (33) according to any one of claims 1 to 4 internally delimiting the inlet of said channel, and a fuel injection system configured to inject fuel into the internal space (72) of the flame-holder ring (70) via said fuel inlet (75).

6. Turbojet engine rear part according to claim 5, further comprising an annular row of flame-holder arms (38) having radially inner ends (38A) arranged axially facing the flame-holder ring (70).

7. Turbojet engine rear part according to claim 6, wherein the flame-holder arms (38) extend freely relative to each other from their radially outer ends (38B).

8. Turbojet engine rear part according to any one of claims 5 to 7, further comprising an air circulation system configured to supply the internal space (72) of the flame-holder ring (70) with air from a secondary stream of the turbojet engine (F3).

9. Aircraft turbojet engine, comprising a diffusion cone (33) according to any one of claims 1 to 4 or a rear part according to any one of claims 5 to 8.
